# EUROPÄISCHE PATENTSCHRIFT

(11) **EP 0 947 758 B1**
(45) Veröffentlichungstag und Bekanntmachung des Hinweises auf die Patenterteilung: **03.12.2003**
(21) Anmeldenummer: 99890033.6
(22) Anmeldetag: 01.02.1999
(51) Int. Cl.: F16L 29/00, F16L 29/02, F16L 37/10

(54) **Tankkupplung zur Verbindung von Schläuchen oder Rohren**
Tank coupling for connecting hoses or pipes.
Connexion de tuyaux avec un raccord pour un réservoir

(30) Priorität: 02.04.1998 AT 57498
(43) Veröffentlichungstag der Anmeldung: 06.10.1999
(73) Patentinhaber: Dipl.-Ing. Ernst Ehrlich & Co, 1230 Wien (AT)
(72) Erfinder: Ehrlich, Ernst Diether, 1230 Wien (AT)
(74) Vertreter: Rippel, Andreas, Dipl.-Ing.

(56) Entgegenhaltungen:
- FR-A- 2 323 090
- US-A- 2 536 428
- US-A- 2 775 256
- US-A- 2 804 317

## Beschreibung

Die Erfindung bezieht sich auf eine Tankkupplung zur Verbindung von Schläuchen oder Rohren, die für den Transport, die Förderung und Lagerung von vorzugsweise flüssigen Produkten dienen, mit einer Mutterteilkupplung, die mit einer Vaterteilkupplung zusammenwirkt, in der ein zwischen einer Offenstellung und einer Schließstellung axial bewegbares Ventil angeordnet ist, dessen Schließstellung durch eine Feder und dessen Offenstellung durch den auf den Vaterteil aufgesetzten Mutterteil bewirkt wird.

Die bisher bekannten Tankwagennormkupplungen ÖNORM C 2135 (DIN 28450) gestatten ein rasches Kuppeln bzw. Lösen von Schlauch- und Rohrleitung. Der Nachteil dieses Systems ist, daß bei etwaigen Gas-Überdrücken in den Lagerbehältern (z. B. bei Systemen mit Gasrückführung) nach Öffnen der Blindkappe bis zum Anschluß des Schlauches Gas-Luft-Gemische ins Freie austreten können.

In der GB 2 045 375 A ist eine Tankkupplung der eingangs genannten Art beschrieben, bei der das Öffen des Ventiles gleichzeitig mit dem Verbinden der Kupplungsteile erfolgt. Dies hat ebenfalls den wesentlichen Nachteil, daß beim Kuppelvorgang selbst bereits das Gas oder Flüssigkeit ausströmen kann.

Die Erfindung hat es sich zum Ziel gesetzt, eine Tankkupplung zu schaffen, bei der in der Zeitspanne bis zum Anschluß des Schlauches kein Gas-Luft-Gemisch austreten kann.

Erreicht wird dies dadurch, daß die Mutterteilkupplung in an sich bekannter Weise mittels eines drehbaren, mit Klauen versehenen Spannringes mit Kurvenbahnen eines Kurventeiles an der Vaterteilkupplung dichtend zusammengepreßt wird, und daß der Ventilschaft des Ventiles über einen auf ihn wirkenden Antriebsteil bewegbar ist, der mit dem Kurventeil über Steuerkurven auf Bewegung verbunden ist, wobei bei Drehen des Spannringes vorerst Mutterteilkupplung und Vaterteilkupplung dichtend verbunden werden und anschließend das Ventil geöffnet wird.

Bei einer bevorzugten Ausführungsform der Erfindung ist der Antriebsteil als Kupplungsstange ausgebildet, die in einer axial bewegbaren Schiebehülse gelagert ist.

Zweckmäßig bewirkt der Antriebsteil nur das Öffnen des Ventiles, wogegen das Schließen in an sich bekannter Weise durch eine das Ventil in Schließstellung drängende Feder bewirkt wird.

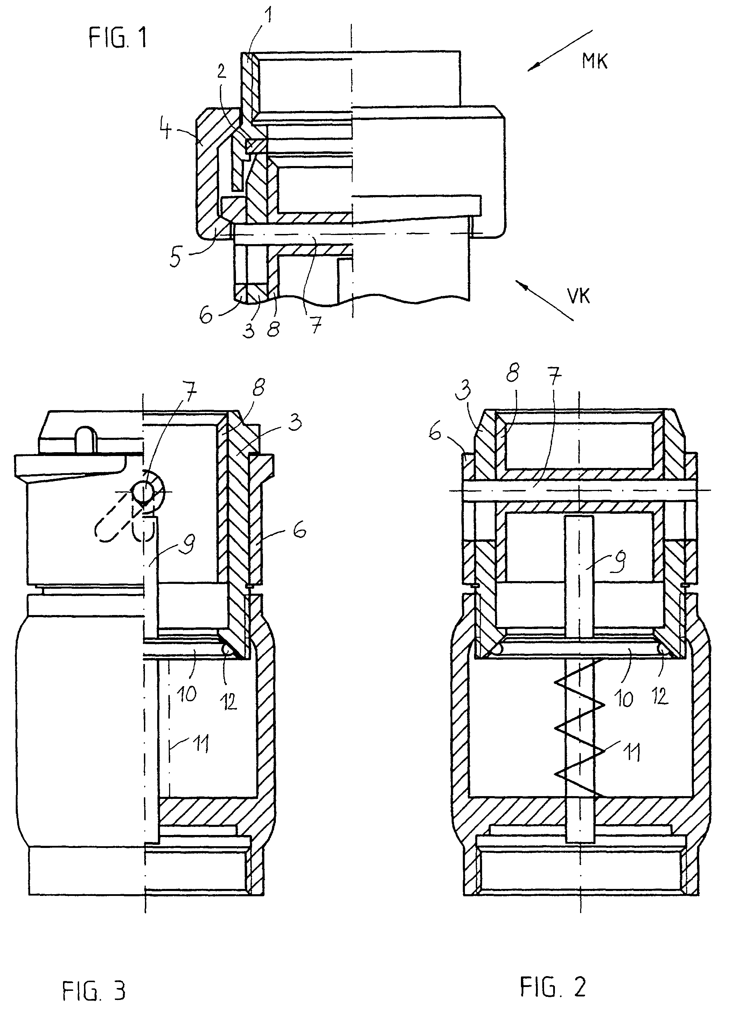

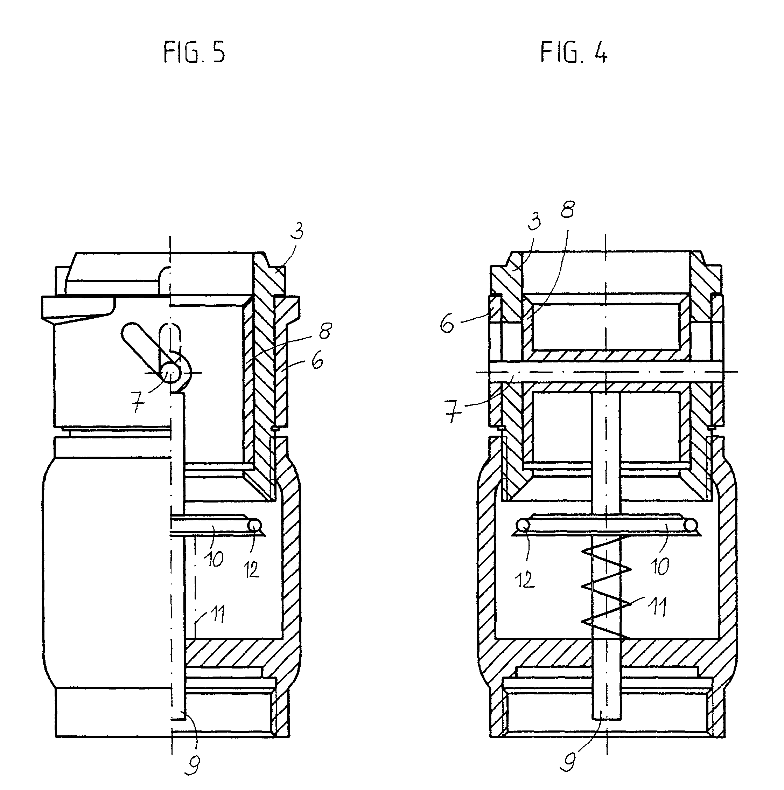

Nachstehend ist die Erfindung anhand eines in den Zeichnungen dargestellten Ausführungsbeispieles näher beschrieben, ohne auf dieses Beispiel beschränkt zu sein. Dabei zeigen: Fig. 1 im Halbschnitt eine an einer Vaterteilkupplung angekuppelte Mutterteilkupplung; Fig. 2 im Schnitt die erfindungsgemäße Vaterteilkupplung bei geschlossenem Ventil; Fig. 3 in einem gegenüber der Fig. 2 um 90° verdrehten Halbschnitt die Vaterteilkupplung; Fig. 4 und Fig. 5 in Darstellungen entsprechend den Fig. 2 und Fig. 3 die Vaterteilkupplung bei geöffnetem Ventil.

Gemäß Fig. 1 wird beim Ankuppeln der am Schlauch montierten Mutterteilkupplung MK an der erfindungsgemäßen Vaterteilkupplung VK das Dichtringstück 1 mit seiner elastischen Dichtung 2 auf die ebene Dichtfläche des Knaggenteiles 3 aufgesetzt.

Durch Drehen des Spannringes 4 der Mutterteilkupplung MK mittels seines Handhebels greifen die nach innen gerichteten Klauen 5 in die Kurvenbahnen des Kurventeiles 6 ein, wodurch die in dem Dichtringstück 1 der Mutterteilkupplung MK befindliche Dichtung 2 an den Knaggenteil 3 angepreßt und so eine gas- und flüssigkeitsdichte Verbindung hergestellt wird.

Durch Weiterdrehen des Handhebels der Mutterteilkupplung MK wird der Kurventeil 6, welcher drehbar auf dem Knaggenteil 3 angeordnet ist, mitgenommen.

Die im Kurventeil 6 angeordneten schraubenförmigen Steuerkurven bewegen mittels der Kupplungsstange 7 eine Schiebehülse 8 in axialer Richtung.

Aus den Fig. 2 bis 5 ist ersichtlich, daß sich diese Bewegung auf den Schaft 9 eines Ventils 10 überträgt und ein Öffnen des Durchganges zwischen Ventil 10 und Gehäuse bewirkt.

Der Abkupplungsvorgang geschieht derartig, daß der Handhebel am Spannring 4 der Mutterteilkupplung MK entgegen dem Uhrzeigersinn bewegt wird. Dadurch dreht sich der Kurventeil 6 gleichsinnig mit und bewegt die Schiebehülse 8 axial in Schließstellung. Dadurch kann eine Feder 11 das Ventil 10 mit seinem O-Ring 12 gegen den Sitz des Knaggenteiles 3 pressen und damit gas- und flüssigkeitsdicht abschließen.

Durch Weiterdrehen des Handhebels des Spannringes 4 erfolgt ein Lösen der Mutterteilkupplung MK vom Kurventeil 6 und damit kann der Schlauch entfernt werden.

Die Konstruktion ermöglicht es auch, im Ruhezustand eine an sich bekannte Mutterteilblindkappe aufzusetzen und so etwaige Verschmutzungen, z. B. durch Staub, hintanzuhalten.

## Patentansprüche

1. Tankkupplung zur Verbindung von Schläuchen oder Rohren, die für den Transport, die Förderung und Lagerung von vorzugsweise flüssigen Produkten dienen, mit einer Mutterteilkupplung (MK), die mit einer Vaterteilkupplung (VK) zusammenwirkt, in der ein zwischen einer Offenstellung und einer Schließstellung axial bewegbares Ventil (10) angeordnet ist, dessen Schließstellung durch eine Feder (11) und dessen Offenstellung durch die auf die Vaterteilkupplung (VK) aufgesetzte Mutterteilkupplung (MK) bewirkt wird, **dadurch gekennzeichnet, daß** die Mutterteilkupplung (MK) mittels eines drehbaren, mit Klauen versehenen Spannringes (4) mit Kurvenbahnen eines Kurventeiles (6) an der Vaterteilkupplung (VK) dichtend zusammengepreßt wird, und daß der Ventilschaft (9) des Ventiles (10) über einen auf ihn wirkenden Antriebsteil (7) bewegbar ist, der mit dem Kurventeil (6) über Steuerkurven auf Bewegung verbunden ist, wobei bei Drehen des Spannringes (4) vorerst Mutterteilkupplung (MK) und Vaterteilkupplung (VK) dichtend verbunden werden und anschließend das Ventil (10) geöffnet wird.

2. Tankkupplung nach Anspruch 1, **dadurch gekennzeichnet, daß** der Antriebsteil als Kupplungsstange (7) ausgebildet ist, die in einer axial bewegbaren Schiebehülse (8) gelagert ist.

## Claims

1. A tank coupling for the connection of hoses or pipes, serving for the transport, conveying, and storage of fluid products for preference, with a female part coupling (MK), which interacts with a male coupling (VK), in that a movable valve (10) is arranged between an open position and a closed position, the closed position of which is effected by means of a spring (11) and the open position of which is effected by the female part coupling (MK) being placed on the male part coupling (VK), **characterised in that** the female part coupling (MK) is pressed together on the male coupling (VK) to form a seal by means of a rotatable tensioning ring (4), provided with claws, with curved tracks of a curved part (6), and that the valve shaft (9) of the valve (10) is capable of being moved by means of a drive part (7) taking effect on it, which is connected for movement to the curved part (6) by means of control curves, whereby, when the tension ring (4) is rotated, first the female coupling part (MK) and male coupling part (VK) are connected such as to form a seal, and the valve (10) is then opened.

2. The tank coupling according to Claim 1, **characterised in that** the drive part is designed as a coupling rod (7), which is mounted in an axially movable sliding sleeve (8).

## Revendications

1. Raccord de réservoir pour le raccordement de tuyaux souples ou rigides servant au transport, au convoyage et au stockage de produits de préférence liquides, avec une partie d'accouplement femelle (MK) coopérant avec une partie d'accouplement mâle (VK) dans laquelle est disposé un clapet (10) mobile axialement entre une position ouverte et une position fermée, dont la position fermée est déterminée par un ressort (11) et la position ouverte est déterminée par la partie d'accouplement femelle (MK) accouplée à la partie d'accouplement mâle (VK), **caractérisé en ce que** la partie d'accouplement femelle (MK) est pressée de manière étanche contre la partie d'accouplement mâle (VK) à l'aide d'une bague de serrage (4) munie de griffes et d'une bague (6) portant un épaulement en forme de pas de vis, et **en ce que** l'axe (9) du clapet (10) est mobile par l'intermédiaire d'un élément de commande (7) agissant sur lui, dont le déplacement est relié à celui de la bague (6) par l'intermédiaire de lumières inclinées faisant office de cames de commande, la rotation de la bague de serrage (4) reliant dans un premier temps la partie d'accouplement femelle (MK) et la partie d'accouplement mâle (VK) de manière étanche et ouvrant, dans un second temps, le clapet (10).

2. Raccord de réservoir selon la revendication 1, **caractérisé en ce que** l'élément de commande a la forme d'une barre d'accouplement (7) disposée dans un manchon (8) coulissant axialement.
